# EUROPEAN PATENT APPLICATION

(11) **EP 4 070 646 A1**
(43) Date of publication of application: **12.10.2022**
(21) Application number: 22166930.2
(22) Date of filing: 06.04.2022
(51) Int. Cl.: A01G 9/14, A01G 9/24, A01G 31/00

(54) **HORTICULTURE FACILITY COMPRISING A WATER LOOP**

(30) Priority: 06.04.2021 NL 2027918
(71) Applicant: Priva Holding B.V., 2678 LC De Lier (NL)
(72) Inventor: KONIJNENDIJK, Edgar Arnoud, 2678 LC De Lier (NL); WESTRA, Jan Johannes Wybe, 2678 LC De Lier (NL); BUDDING, Jacob, 2678 LC De Lier (NL)
(74) Representative: V.O.

(57) **Abstract**

The invention relates to a horticulture facility, comprising a grow area (3), a water loop, a nutrient dosing unit (1) configured to dose nutrients to the feed water for the grow area (3), a hydrogen peroxide dosing unit (4,5), configured to introduce a hydrogen peroxide solution into the water loop; a hydrogen peroxide measurement system configured to determine a hydrogen peroxide concentration in the water loop, said hydrogen peroxide measurement system comprising a sampling unit having a sampling point (2,6,8) downstream of said hydrogen peroxide dosing unit (4,5), which hydrogen peroxide measurement system is configured to withdraw discrete liquid samples from liquid in the water loop at the sampling point (2,6,8) configured to take samples from the water loop and configured to determine a hydrogen peroxide content of a liquid in said water loop; and wherein the horticulture facility comprises a controller unit configured to control the hydrogen peroxide content.

## Description

The invention relates to a horticulture facility, comprising a water loop for recycling water.

Indoor horticulture facilities, such as greenhouses or vertical farming facilities, generally comprise an irrigation system comprising a channel to supply water and nutrients to growing plants and a recycle channel to recycle water and nutrients. Such recirculation provision can also be employed in outdoor horticultural facilities, in particular in arid areas. It is a well-known problem that during a production cycle of the plants, the channel feeding water and nutrients to the plants, and in particular the recycle channel gradually becomes polluted with organic deposits, which may include remains of plants, remains of medium wherein or whereon plants are being grown or micro-organisms. Furthermore, the growing plants or growing media can be a source of undesired organisms (pests), e.g. various bacteria, fungi, viruses, insects, nematodes and the like that are pathogenic or have another potentially adverse effect on the quality or quantity of the plants or parts to be harvested from the plants.

It is common in the art to clean the channels periodically with an aggressive cleansing agent, such as concentrated hydrogen peroxide, to remove deposits, such as biofilm. This is done after taking the plants out of the water loop; typically after the plants have fully grown and ready to be removed from the facility, where possible (e.g. in case the whole plant is a product to be sold, for instance a decorative plant or a tomato plant at the end of its one growing season life cycle). Since the cleansing agent is hazardous to the plant, in particular the roots thereof, the utmost care must be taken that no residual cleaning agent remains in the cleaned conduits, before (new) plants are put back in the recycle loop again. This is typically done by flushing with large amounts of water, after cleaning has taken place.

The risk of contaminating plants with pests present in recycle water can be reduced by subjecting recycle water to treatment with UV-C radiation.

It is an object of the present invention to provide an alternative to known horticultural facilities comprising a water loop and an alternative to known methods of growing plants in such horticultural facilities, wherein one or more problems experienced in known facilities are alleviated or completely overcome.

It has now been found possible to achieve this by introducing specific measures in the water circuit respectively by operating the water loop in a specific manner.

Accordingly, the invention relates to a horticulture facility comprising a grow area (3) configured to grow plants, a water loop configured to recycle water withdrawn from an outlet of the grow area to an inlet of the grow area (3), the water loop comprising a feed water channel (b), which feed water channel (b) comprises a feed water outlet connected to a feed water inlet of a nutrient dosing unit (1) configured to dose nutrients to the feed water, thereby providing an aqueous nutrient liquid, a channel (c) configured to feed the aqueous nutrient liquid from the nutrient dosing unit (1) to growing plants in said area (3), a withdrawal water channel (d) having a withdrawal water inlet in fluid communication with a withdrawal water outlet from said grow area (3) and a recycle channel (e) configured to return water to said grow area (3), preferably via a recycle water channel outlet into the feed water conduit (b) upstream of the nutrient dosing unit (1) or directly into the nutrient dosing unit (1), wherein a hydrogen peroxide dosing unit (4,5) is provided, configured to introduce a hydrogen peroxide solution into the water loop; a hydrogen peroxide measurement system, comprising a sampling unit having a sampling point (2,6,8) in the water loop, which hydrogen peroxide measurement system is configured to withdraw discrete liquid samples from the liquid at the sampling point, which sampling point is configured to take samples from said channel whilst a liquid flow through the channel may continue and which hydrogen peroxide measurement system is configured to measure, in particular monitor, a hydrogen peroxide content of a liquid in said channel. The horticulture facility typically comprises a controller unit configured to control, in particular regulate, the hydrogen content. Generally, the controller unit is an automated controller unit, typically adapted to receive hydrogen peroxide content related input data from the hydrogen peroxide measurement system and adapted to generate an output signal to the hydrogen peroxide dosing unit (4,5) to adjust the hydrogen peroxide dosing rate by the hydrogen peroxide dosing unit (4,5), dependent on said input.

The invention in particular relates to a horticulture facility according to any of the claims 1-10.

A horticulture facility according to the invention is in particular found to be advantageous to grow plants, which can be products to be sold as such (e.g. decorative plants) or to harvest fruits or vegetables from. It has now been found possible to add effective amounts of hydrogen peroxide to the water loop, in particular to a nutrient supply channel (c) providing nutrients to a grow area (3) to remove deposits (such as biofilm), reduce formation of new depositions or even avoid deposit formation in at least part of the water loop, without causing unacceptable damage to the plants being grown or to be grown in the grow area. Alternatively or in addition, hydrogen peroxide can be added to another part of the water loop, such as to withdrawal water from the grow area 3 to clean at least part of the channel for withdrawal water (d). A method for cleaning at least part of the water loop according to the invention can be carried out in between two production cycles of the plants (such as after harvest/removal of a first batch of the product that has been grown yet before starting to grow a subsequent batch). However, advantageously at least part of the water loop is cleaned whilst growing is continued, i.e. whilst allowing the plants to be provided with water and nutrients and water withdrawn from the grow area to be recycled to the grow area wherein plants are being grown, without needing to interrupt the recirculation of water to the plants. Due to the measurement of hydrogen peroxide and controlling the dosage of hydrogen peroxide in accordance with the invention, it is possible to keep hydrogen peroxide concentration at the water inlet into the grow area low enough to avoid unacceptable damage to the plants, in particular their roots. Further, it has been found possible to use hydrogen peroxide to improve the effectivity of a decontamination unit in terms of disinfection and/or degradation of pesticides in withdrawal water to be recycled or discarded.

Thus, the invention further relates to a method according to any of the claims 11-17 and to a process according to claim 18 or 19.

The invention is described more fully herein with reference to the accompanying drawings, in which embodiments of the invention are shown, including elements which may be optional. Also locations of units and process lines may deviate from what is schematically shown. In the drawings, the absolute and relative sizes of items may be exaggerated for clarity. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

The skilled person will be able to design and operate suitable operational units of the horticulture facility or used in a process or method according to the invention, using the present disclosure in combination with common general knowledge and optionally one or more of the documents cited herein..

For the purpose of clarity and a concise description, features are described herein as part of the same or separate embodiments, however, it will be appreciated that the scope of the invention may include embodiments having combinations of all or some of the features described.

As used herein, the singular forms "a", "an" and "the" are intended to include the plural forms as well -, e.g. "grow area" includes "grow areas"; " a sampling point" includes "a plurality of sampling points", etc, unless the context clearly indicates otherwise. The term "or" includes any and all combinations of one or more of the associated listed items, unless the context clearly indicates otherwise (e.g. if an "either ....or" construction is used). It will be understood that the terms "comprises" and "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise, it will be understood that when a connection between structures or components is described, e.g. a passage way, this connection may be established directly or through intermediate structures or components unless specified otherwise.

The term "(at least) substantial(ly)" or " (at least) essentiall(ly)" is generally used herein to indicate that it has the general character or function of that which is specified. When referring to a quantifiable feature, this term is in particular used to indicate that it is at least 75 %, more in particular 90 % or more, even more in particular 95 % or more of the maximum of that feature. The term 'essentially free' is generally used herein to indicate that a substance is not present (below the detection limit achievable with analytical technology as available on the effective filing date) or present in such a low amount that it does not significantly affect the property of the product that is essentially free of said substance. In practice, in quantitative terms, a product is usually considered essentially free of a substance, if the content of the substance is 0 - 1 wt.%, in particular 0 - 0.5 wt.%, more in particular 0 - 0.1 wt.%.

In the context of this application, the term "about" includes in particular a deviation of 10 % or less from the given value, more in particular 5%, more in particular 3% or less.

In the context of this application, the term "near" generally means that it is closer to the reference point to which it is near than to a point opposite of the reference point; e.g. something being near an inlet of a channel, such as a conduit, or unit means that it is closer to said inlet than to the outlet of said conduit or unit, in particular at a distance of at most 25 %, more in particular at a distance of at most 10 %, even more in particular at distance of at most 5 % of the total dimension (such as length) defining the flow path through the conduit or unit.

The plants can be grown on or in a known growing medium or root environment for the type of plant being grown, e.g. greenhouse substrate, aqua-culture or soil. The invention is particularly advantageous when growing plants not in the natural soil (the pedosphere; *Dutch: 'vollegrond')* but making use of substrate-based cultivation, in particular on a substrate lacking sufficient oxidizable organic matter to protect roots from damage against chemicals in the supplied water. Such lack of protection is also prominent in aqua-cultures. The substrate can be an artificial material or a processed natural material. Typical examples of substrates are rock wool; polymeric (plastic) substrates, such as a polyurethane foam; inorganic porous granular materials, e.g. a porous ceramic material or volcanic material (like pumice). The present invention can be employed in a particularly advantageous manner in indoor horticulture applications, especially for greenhouses or indoor farming, especially when not growing the plants in the pedosphere. Thus, at least the grow area (3) of a horticulture facility preferably is indoors. Indoors horticulture facilities are also referred to in the art as Closed Environment Agriculture (e.g. the USA) or Plant Factories (e.g. in Japan). More preferably, the grow area is or is present in a greenhouse. In an alternative embodiment, the horticulture facility comprises an outdoor grow area, typically an irrigated grow area provided with drainage control of the grow area.

The horticulture facility (used) according to the invention comprises a water loop (which may also be referred to as a water recirculating passage way) via which - during use - water is recirculated from the grow area and back thereto, after having been supplemented with nutrient (fertilizer). The water loop comprises a
withdrawal water channel, (d, d1, d2, d3) configured to transport water withdrawn from the grow area (3) wherein the plants are being grown (such channel for withdrawing water from the grow area is also referred to in the art as a drain");
a recycle channel (e) configured to receive water from the water withdrawal channel and return it to the grow area (typically at least via nutrient dosing unit 1 and channel c),
a feed water channel (b) configured to receive water from the recycle channel (e) and/or a water supply channel (a) which water supply channel is outside the water loop (in principle the recycle channel may mound into the nutrient dosage unit directly or be configured to return water to the grow area whilst short-cutting the nutrient dosage unit)
a nutrient dosing unit (1) configured to receive feed water (preferably including recycle water) from the feed water channel (b) and configured to add the nutrient to the feed water to obtain an aqueous nutrient liquid, a channel (c) configured to feed the aqueous nutrient liquid from the dosing unit to the grow area (3).

In accordance with the invention, the water loop also comprises at least one hydrogen peroxide dosage unit (4, 5) and at least one sampling point (2,6,8) of a hydrogen peroxide measurement system. Further, generally one or more further water treatment units are present in the water loop, such as a decontamination treatment unit (7), in particular a disinfection unit. Further a filter may be provided, such as a sand filter, typically positions upstream of the disinfection unit.

The grow area also comprises a passage way for water/aqueous nutrient liquid (where this is contacted with the roots of the plants) which forms part of the water loop. Further, usually a discharge channel (f) is present, to allow removal of water from the loop. Discarding water is in particular done if there is an unacceptable build-up of a component, such as sodium, in the water. In principle, the inlet of the discharge channel can be at any point in the water loop; in practice it is undesired to use a discharge channel for removal of water during use of the facility located between the nutrient dosing unit (1) and the grow area (3), because this would result in undesired drainage of nutrients. Usually, the inlet of the discharge channel (f) is located at the water withdrawal channel (d, d1, d2, d3) or directly at the outlet of the grow area. A water storage can be provided in the water loop, typically in the withdrawal water passage way having an inlet for withdrawal water originating from the grow area, an outlet for withdrawal water in fluid communication with the remainder of the water loop and an outlet in fluid communication with the discharge channel. The discharge channel is typically closable, facilitating intermittent withdrawal of water.

The channels (a, b, c, d, e, and/or f) are typically essentially closed (except for at their inlets and outlets). This is important for controlling biofouling. Moreover, closed channels allow flowing the water under pressure, which allows use of water trickling devices to dose water to the grow area. Usually, channels a-f comprise one or more conduits, such as one or more pipes, through which the water or aqueous liquid flows, in use. Herein below embodiments will be described in further detail, also referring to conduits a-f; the skilled person will be able to replace the conduit for another type of channel in these embodiment, where appropriate

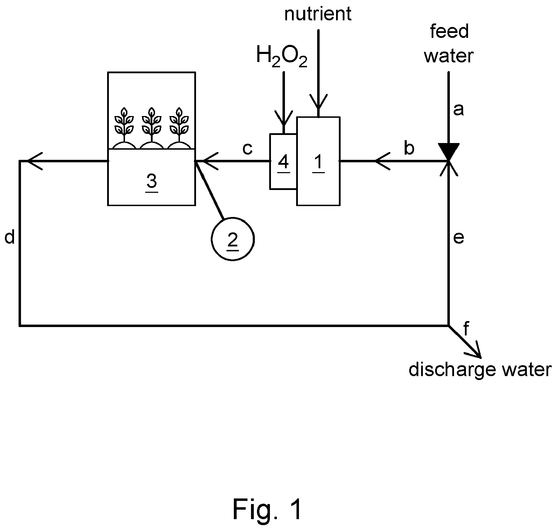

Generally in a horticulture facility according to the invention feed water is obtained from outside the facility in introduced into the water loop (via feed water supply a, in Figures 1-3). This feed water can e.g. be rain water, surface water, ground water, tap water or a combination thereof. Generally, this feed water is pre-treated in a known manner, such as a pH adjustment, dependent on the plants to be grown. Usually, the pH is adjusted to a mildly to moderately acidic pH, in particular in the range of about 5.5 - about 6.5 . A pH of about 6.5 or less is in particular desired to avoid too high carbonate concentrations in the water, which can also be a contributor to inorganic deposits and/or to reduce a pH-buffering capacity present of the (bi)carbonate. Further, the feed water is usually subjected to a decontamination treatment, typically a disinfection treatment, for which irradiation with UV-light, in particular UV-C light is particularly suitable. Suitable equipment is known in the art and commercially available, e.g. Priva Neutralizer and Priva Vialux-Line from Priva B.V., De Lier, The Netherlands. Pre-treatment units, such as a pH adjustment unit and a disinfection unit (not shown in Figures 1-3) are usually provided in a feed water supply (a), wherein water is withdrawn from the grow area (3) and recycled thereto. Feed water (from supply conduit a) is combined with recycle water (from recycle conduit (e) and fed to a nutrient dosing unit via a feed conduit (b), where nutrients (fertilizer) are added to the feed water, to obtain a nutrient liquid that is fed via a conduit (c) to the growing plants in the grow area (3). Water that is not absorbed by the plant growing medium and the plants and that is not evaporated can be withdrawn from the grow area. It usually flows from the outlet out of the grow area through a withdrawal water conduit (d, d1, d2, d3), wherein one or more further units may be provided, such as a water storage a disinfection unit, a hydrogen peroxide dosage unit or a measurement system for hydrogen peroxide, one or more other components or a process parameter . Disinfection of the withdrawn water is recommended to reduce the risk of contagion (infection) of growing plants that are watered by recycle water. Further, a water discharge is usually provided (conduit f). If a decontamination unit, such as a disinfection unit (7) is present in the withdrawal water channel, the water discharge is usually present downstream of the outlet of the grow area (3) and downstream of the decontamination unit (7), because the treatment of the water to be discarded is positive for the quality of the discarded water, microbiologically or chemically (due to degradation of UV-degradable or chemically oxidizable components in the discharge water, see also below).

The combination of following features (and means for carrying out these features) are in particular special features underlying the present invention, for advantageously using a horticulture in accordance with the invention, whilst avoiding unacceptable or undesired damage to the plants, which damage may be caused by a chemical or a pest:
- the introduction of a hydrogen peroxide solution in the aqueous nutrient solution (passing through channel (c)) to be fed to the growing area and/or the introduction of a hydrogen peroxide solution in drain water withdrawn from the grow area comprising growing plants (said drain water passing through channel d),
- the detection of hydrogen peroxide to provide detection data on the hydrogen peroxide (said data being a measure for the peroxide concentration) in the water at a point distinct from (and downstream of) the introduction of the hydrogen peroxide solution,
- the use of the obtained detection data to regulate the dosing rate of hydrogen peroxide solution to the withdrawn water, and
- the recycle of withdrawn water (drain water) to the grow area comprising growing plants.

Next three major embodiments of the invention are described which may be combined in any combination of two or three of said embodiments in a single horticulture facility, method or process according to the invention.

Embodiment I (of which a preferred example is schematically shown in Figure 1) is in particular suitable to remove deposits or avoid deposition in at least part of the passage way (c) for feeding the aqueous nutrient solution from nutrient dosing unit (1) to the grow area (3). This part of the water loop is in particular susceptible to deposition problems because the fluid passing through the channel is rich in nutrients, which may also promote biofilm formation. When starting with a clean passage way, the formation of (organic) deposits, such as algae, microorganisms can be at least substantially avoided or at least the deposition rate can be reduced significantly, whilst avoiding any substantial damage to the growing plants.

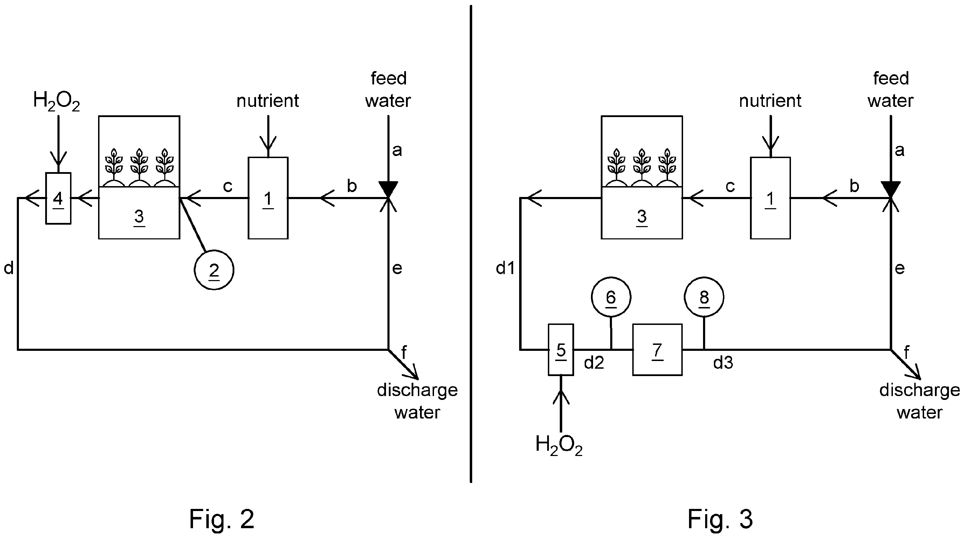

Embodiment II (schematically shown in Figure 2) is in particular suitable to address deposition problems in at least part of a passage way (d, d1, d2, d3, e, b, 4, 5, 6, 7, 8, 1, 2) for water withdrawn from the grow area (3) that forms a water loop with the grow area. When starting with a clean passage way, the formation of (organic) deposits, such as algae, microorganisms or remains from the grow area can be at least substantially avoided or at least the deposition rate can be reduced significantly , whilst avoiding any substantial damage to the growing plants.

In embodiment I and in embodiment II, a hydrogen peroxide dosage unit (4) is present to dose hydrogen peroxide solution at the beginning of the part of the water loop that is to be cleaned or wherein deposition is to be avoided or reduced. A minimally effective dosage depends on factors such as the intended purpose or effectiveness, type of plants that are being grown, the substrate, content of the water that is withdrawn from the grow area, temperature and the like. Generally, the hydrogen peroxide dosage provides a concentration of at least about 2 ppm at the introduction point (4), preferably of at least 5 ppm. Usually the hydrogen peroxide dosage provides a concentration of 250 ppm or less at the introduction point, preferably of 200 ppm or less, more preferably of 180 ppm or less.

A relatively low concentration at the introduction point is in particularly suitable for treatment of an at least substantially clean system, to avoid depositions or at least reduce the rates at which depositions are formed. For such preventive cleaning treatment a concentration of at least about 2 ppm, preferably of at least about 5 ppm, in particular of about 10 ppm or more is already effective. For solely such preventive treatment the concentration is advantageously about 20 ppm or less, in particular about 15 ppm or less, although - of course - a higher concentration may be employed, if desired. For cleaning a system usually a higher concentration is used than for a solely preventive treatment; usually, the hydrogen peroxide concentration at the introduction point is then more than 10 ppm, preferably at least 15 ppm, in particular at least 20 ppm. The concentration for cleaning at the introduction point is usually about 50 ppm or less, although a higher concentration can be employed, in particular if a combination with embodiment III is desired. In case (also) hydrogen peroxide is to be used for advanced oxidation (oxidation in combination with UV-C), the concentration at the introduction point preferably is at least about 40 ppm, preferably at least about 60 ppm, in particular about 80 ppm or more. Preferably the concentration at the introduction point in case (also) hydrogen peroxide is to be used for advanced oxidation is about 180 ppm or less.

Figure 1 schematically shows a preferred design according to embodiment I. Figure 1 shows a hydrogen peroxide dosing unit (4) downstream of and adjacent to the nutrient dosing unit (1). In an embodiment, both units are combined in a single unit, configured to administer both hydrogen peroxide and nutrients to the water to be fed to the growing area. In a further embodiment, the hydrogen peroxide unit (4) is arranged upstream of the nutrient dosing unit (1), preferably at or near the outlet of channel b for feeding water to the nutrient dosing unit (1). Figure 1 shows a single hydrogen peroxide dosing unit, but it is also possible to have a plurality thereof, e.g. a further hydrogen peroxide dosage unit in the recycle conduit ( e), the feed water conduit (b) or in the conduit (d) for withdrawing water from the grow area (3).

In Embodiment II, of which a preferred example is schematically shown in Figure 2, a hydrogen peroxide dosing unit (4) is usually provided at or near the inlet of the withdrawal water conduit (d). Thus, essentially all of the passage way for withdrawal water, including withdrawal conduit (d), the recycle conduit (e), feed water conduit (d), the internals of nutrient dosage unit (1) through which the feed water passes and wherein nutrients are added to the feed water and conduit (c) for the aqueous liquid comprising nutrients can be subjected to treatment with hydrogen peroxide to address the deposition problem.

In embodiment I and in embodiment II, a sampling point of the hydrogen peroxide measurement system (2) is usually provided downstream of the nutrient dosing unit (1), yet upstream of the area (3) for growing plants, preferably at or near the outlet of the conduit (c) for feeding the nutrient liquid. A maximally allowable hydrogen peroxide concentration at the sampling point depends on the plants that are being grown and the medium wherein they are grown. E.g. roots in natural soil comprising a substantial amount of oxidizable organic matter (pedosphere or soil taken therefrom) may tolerate feeding with a nutrient solution having a higher (residual) peroxide content than substrates lacking such matter. A suitable maximum can be determined on the basis of the information disclosed herein in combination with common general knowledge (see also e.g. Biological Factors - UV-Oxidation Technology for Disinfection of Recirculation Water in Protected Cultivation, W.T. Runia, S. Boonstra , Acta horticulturae. no. 644, (2004): 549. Generally, the maximally allowable hydrogen peroxide concentration of the liquid fed to the plants is 1.5 mmol/l or less, in particular 0.75 mmol/l or less, more in particular 0.44 mmol/l or less. Preferably, at least on average, the hydrogen peroxide concentration in the nutrient solution fed to the growing plants is kept below 0.3 mmol/, especially, when growing plants on a substrate having poor protective properties against hydrogen peroxide. For avoiding any substantial risk to root damage due to hydrogen peroxide, it is in particular recommended to maintain the hydrogen peroxide concentration in the nutrient liquid fed to growing plants at a concentration generally regarded as safe. E.g. for lettuce and the like it has been reported that values below about 0.12 mmol/l generally are safe. In principle, the hydrogen peroxide concentration at the outlet of conduit ( c) can be 0 (below the detection limit). However, if there is a risk of unacceptable deposition in the conduit (c) between nutrient dosing unit (1) and grow area it may be desired to have a concentration at the outlet of channel c larger than 0, in particular of 0.03 mmol/l or more, more in particular of 0.05 mmol/l or more.

Embodiment III, of which a preferred design is schematically shown in Figure 3, is in particular suitable to improve the decontamination effects in a disinfection unit (7) present in the water loop of the horticulture facility. The combination of hydrogen peroxide and UV-C in particular offers a synergistic improvement. It is considered that the formation of radicals, in particular hydroxyl radicals from the hydrogen peroxides when exposed to UV-C radiation in the disinfection unit contributes to an improved decontamination (improved disinfection and/or improved degradation of oxidizable chemical compounds).

The improvement can comprise an increased degree of disinfection, in particular a higher reduction in the concentration of viable pathogenic micro-organisms (higher effectivity) or a higher rate at which the micro-organisms are killed or otherwise inactivated (meaning that a target concentration is reached faster). Further, the improvement can comprise a reduction of undesired chemical substances in the withdrawal water, such as a reduction in the pesticide concentration in the withdrawal water, which is not generally achievable in a conventionally applied UV-irradiation based disinfection unit. It has been found that the combination of supplying hydrogen peroxide prior to the treatment by UV-C also contributes to the degradation (by oxidation) of oxidizable chemical substances, such as pesticides

In embodiment III, the disinfection unit (7) is configured to receive withdrawal water from the area (3) to a treatment with UV-C light. Upstream of the disinfection unit (7) a hydrogen peroxide dosing unit (5) is present. In principle this can be the same dosing unit (4) as in embodiment (II), which is typically positioned at or near the inlet of the conduit (d) for receiving withdrawal water from the water outlet of the grow area (3); thus, also addressing deposition problems upstream of the disinfection unit. However, for improving the working of the disinfection unit (7), an alternative or additional hydrogen peroxide dosage unit (5) is advantageously present to provide hydrogen peroxide for treatment in the disinfection unit. When combined with embodiment I, the hydrogen peroxide dosage unit (5) is thus typically present in addition to hydrogen peroxide dosage unit (4) for dosing hydrogen peroxide to the nutrient solution supply channel (c ). When combined with embodiment II, the hydrogen peroxide dosage unit (5) is thus typically present in addition to hydrogen peroxide dosage unit (4) for dosing hydrogen peroxide to the channel (d1) for withdrawal of water from growth area (3).

Further, in embodiment II, a sampling point of the hydrogen peroxide measurement system is provided downstream of the hydrogen peroxide dosage unit, which is adapted to provide data about the hydrogen peroxide concentration, on the basis of which the hydrogen peroxide dosage rate is regulated. In principle this can be the same sampling point (2) as in embodiment I. However, in embodiment I, the sampling point is usually located in conduit (c) downstream of the nutrient dosage unit (1), which is relatively remote from a preferred location of the disinfection system (7), which disinfection system is typically in withdrawal water conduit (d)..

Advantageously, in embodiment II, a sampling point (6) is provided downstream of the hydrogen peroxide dosing unit (5) and upstream of the withdrawal water inlet of the disinfection unit (in conduit d2), in particular near the water inlet, or at the water inlet of the disinfection unit. This allows a regulation of the hydrogen dosage on the basis of hydrogen peroxide concentration in the water fed into the disinfection unit, whereby a conditioned oxidation of pesticides and/or disinfection can be carried out; further this provides an (indirect) safeguard against an unacceptably high hydrogen peroxide concentration downstream of the disinfection unit. Alternatively or in addition, a sampling point (8) is provided downstream of the hydrogen peroxide dosing unit (5) at the outlet for the decontaminated water of the disinfection unit (7) or downstream of the disinfection unit (7) yet upstream of a water discharge channel (f) (i.e. in conduit d3, upstream of the recycle conduit (e)). This embodiment is particularly preferred for its direct control of the hydrogen peroxide concentration. Furthermore, in combination with the sampling point (6) upstream of the treatment in the disinfection unit (7), the hydrogen peroxide concentration prior to treatment and after treatment can be compared; the difference between said concentrations is a measure for the amount of material (pesticides, micro-organisms, organic matter) that has been oxidized.

A maximally allowable hydrogen peroxide concentration at the sampling point depends to some extent on the plants that are being grown, the location of the sampling point, the composition of the water to be treated in the disinfection unit. Suitable maxima can be determined on the basis of common general knowledge in combination with the information disclosed herein. Generally, for decontamination (disinfection; degradation of undesired chemical components) of the withdrawal water from the grow area (3), hydrogen peroxide is dosed to provide a hydrogen peroxide concentration of the withdrawn water entering the disinfection unit 7 (e.g. measured at a sampling point (6) prior to the decontamination treatment 7) in the range of about 0.1 - about 2.0 mmol/l. Preferably, said hydrogen peroxide concentration is at least about 0.5 mmol/l for a strong positive contribution to the decontamination. Preferably, said hydrogen peroxide concentration is 1.25 mmol/l or less. Above such concentration, the added positive effect to decontamination in combination with the UV-C radiation is usually limited. In particular good results are achieved with withdrawal water containing about 1.0 mmol/l hydrogen peroxide, when entering the disinfection unit. In principle, the hydrogen peroxide concentration at the outlet of the disinfection unit (7) can be below the detection limit (0). However, in practice this is not necessary. In general, the hydrogen peroxide concentration at the outlet of the disinfection unit (7) will be such that the concentration of the nutrient liquid fed to the growing plants remains at an acceptable level (see also Embodiment I), or - at least when water is discarded (f) at a concentration of which it is acceptable to be in the drain water to be discarded into the environment. A residual hydrogen peroxide concentration effective in contributing to the deposition reduction or avoidance thereof may even be beneficial.

The hydrogen peroxide measurement system can be based on a known system. However, it is a challenge to monitor hydrogen peroxide concentrations adequately to allow an satisfactory regulation of the hydrogen peroxide dosing on the basis thereof in a water loop of a horticulture facility. Volumetric measurements are difficult to employ, in view of the instability of hydrogen peroxide in solution. Electrochemical detection using a probe may suffer from robustness problems.

Accordingly, in accordance with the invention the hydrogen peroxide measurement system is configured to withdraw discrete liquid samples from the liquid at the sampling point whilst a liquid flow through may continue.

Advantageously the sampling unit comprises a closable passage way from the from the sampling point at which the sample is to be withdrawn (e.g. at or near the end of channel c) to the detection zone of the hydrogen peroxide measurement system. Preferably a solenoid valve is provided in the passage way to open/close the passage way. The fluid in the water loop channels is usually under super-atmospheric pressure, whereby flow of fluid through the passage way occurs without needing a pump, when the solenoid valve is opened and the sampling point is provided in such channel. Said passage way of the sampling unit may comprise a filter.

Sampling (and thus measurement) rate can be chosen within wide limits and depend on the specific application. At least one average, sampling/measurement usually takes at least once per 12 hours, in particular at least once per 6 hours, preferably at least once every 4 hours, e.g. about once per hour. It usually suffices to sample and measure at least one average once per minute or less, in particular once per 15 minutes or less, more in particular once per 30 minutes or less. When dosing of hydrogen peroxide is done discontinuously or in the form of a single flush or a small number of flushes (e.g. up to 5) in a production cycle of the plants, sampling rate may decrease as more time lapses from the end of introduction of a particular dosage volume till a subsequent start of a hydrogen peroxide dosages or be stopped till a subsequent start of a hydrogen peroxide dosage when the measured concentration is sufficiently low.

The samples are subjected to a hydrogen peroxide detection step, typically in an optical detector unit, preferably a UV/VIS spectrophotometer or a fluorescence spectrometer.

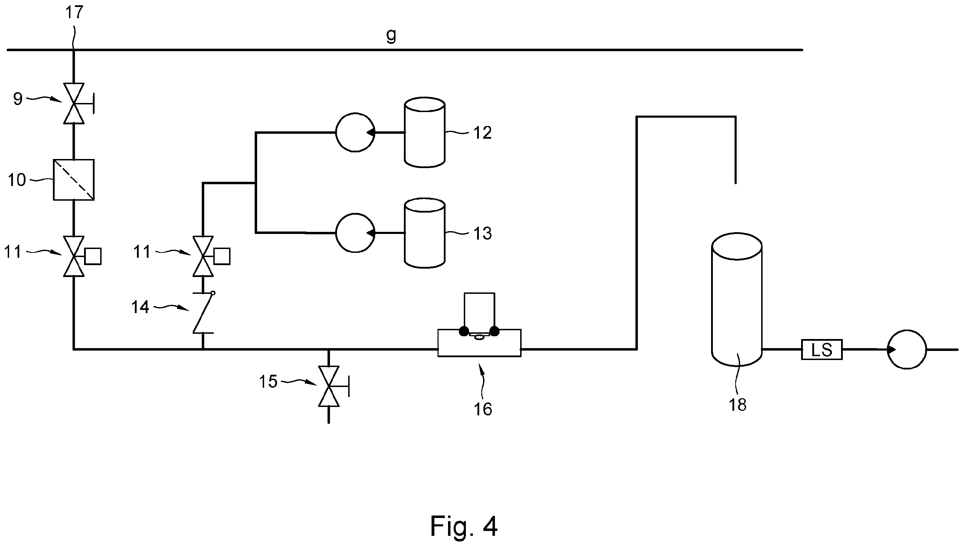

Figure 4 schematically shows a hydrogen peroxide measurement system; the sampling point (17) is shown as a T-junction from the main line g (which preferably is selected from conduit c, d, d1, d2 and d3 as shown in Figures 1-3). In a conduit forming a passage way for the samples to the detector unit 16 a valve 9 is provided, which may be manual, also for extra throttling. Downstream of the valve, preferably a filter is provided. Further a (motor) valve is provided in the passage way, configured to open and close to let samples pass to the detector unit 16. Usually, one or more conduits are provided configured to feed one, two or more calibration samples to the measuring device, wherein also a (motor) valve is provided, configured to open and close to let samples pass to the detector unit 16. Downstream of the detector unit as reservoir 18 may be provided for the waste from the detector unit. The skilled person will be able to design alternative configurations based on common general knowledge and the information disclosed herein.

Particularly preferred is detector unit comprises a sample test area, the test area comprising a colorimetric reagent system, preferably a dry-reagent test strip, for (direct) detection of the presence of hydrogen peroxide in the sample, the colorimetric reagent system comprising a chromogen responsive to hydrogen peroxide and a catalyst catalyzing the reaction of hydrogen peroxide and an electron donor into water and an oxidized donor. In principle the catalyst can be an inorganic catalyst. Preferred is a biocatalyst, in particular a biocatalyst having peroxidase activity. Suitable are in particular peroxidases classifiable under EC 1.11.1.7). Examples of suitable peroxidases are myeloperoxidase; lactoperoxidase; verdoperoxidase; guaiacol peroxidase; thiocyanate peroxidase; eosinophil peroxidase; Japanese radish peroxidase; horseradish peroxidase (HRP); extensin peroxidase; heme peroxidase; MPO; oxyperoxidase; protoheme peroxidase; pyrocatechol peroxidase; scopoletin peroxidase. The catalyst is selected to have sufficient activity for a reaction with peroxide when contacted with the sample of which the hydrogen peroxide content is determined. In particular, a biocatalyst, such as an enzyme, should have peroxidase activity at the pH of the intended sample. As follows from the above, feed water usually is mildly to moderately acidic, in particular having a pH in the range of 5.5-6.5. Water withdrawn from the grow area may be more acidic, e.g. of about 4.0. Thus, dependent on the position of the sampling point, e.g. in the feed water channel b, the nutrient solution channel c or in withdrawal water channel, a catalyst with a different optimal pH may be selected. Usually, the catalyst has peroxidase activity at a pH in the range of about 4.0 to about 6.5.

Suitable colorimetric reagent systems can be based on systems described in the art in combination with the present disclosure and common general knowledge. E.g. US 1,0246,732B2 describes a colorimetric dry-reagent test strip for direct detection of the presence of hydrogen peroxide in strongly acidic solutions without the necessity of a pH neutralization step. The contents of this publication, in particular the claims and figures are incorporated by reference.

In a particularly preferred embodiment, the hydrogen peroxide measurement system comprises a sampling unit configured to contact samples at or taken from the sampling point to sample test areas, wherein the hydrogen peroxide measurement system comprises a fluid-tightly sealed housing, wherein is comprised a spindle for accommodating a support having sample test areas; an actuator for rotating said spindle; an aperture in the fluid-tightly sealed housing for contact of at least one of said test areas with the samples; an optical detector unit, in particular a UV/VIS spectrophotometer or a fluorescence spectrometer, configured to measure an optical property of at least one of said test areas after during passing said aperture; and a detection data transmitter, configured to transmit detection data to the automated controller. Such measurement system is advantageously based on EP 1 815 785 A1 and the information provided in the present disclosure. The contents of EP 1 815 785 A1, in particular the claims and figures are incorporated by reference. It is noted that EP 1 815 785 A1 does not provide a description of a colorimetric test material suitable for detecting hydrogen peroxide, such as the peroxidase and the chromophore serving as electron donor for reaction with the hydrogen peroxide, which are advantageously provided at or in the support having sample test areas.

A horticulture facility according to the invention or used in a method or process according to the invention generally comprises a controller unit configured to control, in particular regulate, a hydrogen peroxide content at least at one point in the water loop. The hydrogen peroxide content can be adjusted by changing the dosage ranged dependent on results of the measurement of the hydrogen peroxide content. Advantageously, this is done in an automated manner.

The controller unit is typically an instrument configured to automatically compare set-points or threshold values with operating points and minimizing the difference, e.g. using PID algorithms. Accordingly, a PID-controller is particularly suitable.

Usually, the automated controller unit is adapted to receive hydrogen peroxide content related input data from the hydrogen peroxide measurement system and the automated controller unit is adapted to generate an output signal to the hydrogen peroxide dosing unit (4,5) to adjust the hydrogen peroxide dosing rate by the hydrogen peroxide dosing unit (4,5), dependent on said hydrogen peroxide content related input. Further, the automated controller unit may provide output data to a display or other device to visualize the data measured by the measurement system. These can be raw data or processed data to show a hydrogen peroxide amount (e.g. grams) or concentration (e.g. ppm, mmol/l etc,). Output data of the automated controller can also be visualized, e.g. a raw signal to the hydrogen peroxide dosage unit or processed into a flow rate value (e.g. 1 solution/hr) or in terms of amount of hydrogen peroxide dosed per time unit.

Preferably, the automated controller is adapted to compare measured data obtained from the hydrogen peroxide monitoring system (2,6,8) regarding the hydrogen peroxide content with one or more set-point values or threshold values and to regulate the hydrogen peroxide content at the sampling point by adjusting a rate or amount of hydrogen peroxide added to the water by the hydrogen peroxide dosing unit (4,5), dependent on the outcome of said comparison, i.e. when there is an unacceptable deviation from the set-point value or threshold value.

The automated controller system can for example be implemented by modifying a known process control device, e.g. a Priva Process Control Device (Priva B.V. De Lier, the Netherlands). The automated controller system can be configured to control, in particular regulate other relevant parameters. For instance, the horticulture facility may comprise a growth analysis system, e.g. providing data regarding the weight of the growing plants or a drain sensor, monitoring the loss of water from the system (by comparing volume per time unit of water going into the grow area and volume per time unit of withdrawal water withdrawn from the grow area (the missing part comprising water uptake by the plants and evaporated water). Further, a pH sensor may be present to measure the pH in a part of the recycle loop and which may send output data to the automated controller. The automated controller may then be configured to send an output signal to a pH adjustment unit adapted to adjust the pH of water in the loop.

With reference to Figures 1 and 2 and Embodiments I and II, described above, the present invention further relates to a method for cleaning at least a part of a water loop, reducing deposition in at least part of a water loop or avoiding deposition in at least part of a water loop of a horticulture facility, preferably a facility according to the invention, comprising plants, which water loop comprises a
a withdrawal water conduit (d, d1, d2, d3) via which water withdrawn from a grow area (3) wherein the plants are being grown;
a recycle conduit (e) which receives water from the water withdrawal conduit,
a feed water conduit (b) which receives water from the recycle conduit (e)
(where the recycle is joined with fresh water from a water supply conduit (a) which water supply conduit is outside the water loop)
a nutrient dosing unit (1) receiving feed water (including recycle water) from the feed water conduit (b), in which unit nutrient (fertilizer) is added to the feed water to obtain an aqueous nutrient liquid,
a conduit (c) via which the aqueous nutrient liquid from the dosing unit is fed to the plants in the grow area (3), wherein
hydrogen peroxide solution is added to the water loop and the resultant liquid in the water loop comprising the hydrogen peroxide is passed through the water loop or a part thereof to be cleaned, to be subjected to deposition reduction or to be subjected to deposition avoidance, thereby cleaning, reducing deposition or avoiding deposition in at least part of the water loop downstream of the introduction of the hydrogen peroxide; wherein a hydrogen peroxide concentration in the water loop downstream of the addition of the hydrogen peroxide yet upstream of the plants in the grow area (3), preferably at the outlet of or (near the outlet) in the conduit (c) via which the aqueous nutrient liquid is fed from the nutrient dosing unit (1) to the growing plants in said area (3), is determined;- if desired the dosing rate at which the hydrogen peroxide is added to the withdrawn water is
determined on the basis of said determined hydrogen peroxide concentration. Particularly good results are achieved with a cleaning method wherein hydrogen peroxide is dosed into conduit (c) for feeding aqueous nutrient and cleaning the inner wall(s) of the conduit making use of the hydrogen peroxide (Embodiment I), wherein typically the hydrogen peroxide concentration is measured at or near the outlet of said conduit (c). The hydrogen peroxide concentration of the liquid to be fed to the grow area is generally kept at a or below a maximum value that is still sufficiently tolerated by the plants that are being grown, as also described above.

Advantageously, the determined hydrogen peroxide concentration is compared with an upper threshold value, a lower threshold value or both and the hydrogen peroxide dosage rate is increased if the determined concentration is at or below the lower threshold value, respectively decreased if the determined concentration is at or above the upper lower threshold value.

With reference to Figure 3 and Embodiment III, described above, the present invention further relates to a method for decontaminating withdrawal water withdrawn from a grow area (3) of a horticulture facility, wherein plants are being grown, preferably a facility according to the invention, wherein
water comprising nutrients (an aqueous nutrient liquid) is fed to the plants in the grow area and withdrawal water is withdrawn from the grow area, hydrogen peroxide solution is added to the withdrawal water and the resultant withdrawal water comprising hydrogen peroxide is flown through at least part of the water loop
the withdrawal water, comprising hydrogen peroxide is subjected to a decontamination treatment (7) by irradiation with UV-light, in particular UV-C light;
at least a part of the decontaminated withdrawal water is returned to the grow area (3) wherein plants are being grown, wherein
wherein
a hydrogen peroxide concentration in the water loop downstream of the addition of the hydrogen peroxide yet upstream of the plants in the grow area (3) is determined, before and/or after the decontamination treatment (7); if desired the dosing rate at which the hydrogen peroxide is added to the withdrawal water is regulated on the basis of said determined hydrogen peroxide concentration or hydrogen peroxide concentrations.

Advantageously, the determined hydrogen peroxide concentration is compared with an upper threshold value, a lower threshold value or both and the hydrogen peroxide dosage rate is increased if the determined concentration is at or below the lower threshold value, respectively decreased if the determined concentration is at or above the upper lower threshold value.

In an embodiment wherein hydrogen peroxide is determined hydrogen peroxide concentration **before** the disinfection unit, the hydrogen peroxide concentration at the sampling point is preferably kept in the range of 0.1 - 2.0 mmol/, more preferably in the range of 0.5 - 1.25 mmol/l.

In an embodiment wherein hydrogen peroxide is determined hydrogen peroxide concentration **after** the disinfection unit, the hydrogen peroxide concentration at the sampling point is preferably kept below 1.5 mmol/l, below 0.75 mmol/l, below 0.3 mmol/l or below 0.12 mmol/l (with the proviso that it is not exceeding the hydrogen peroxide concentration in the water entering the disinfection unit). In the disinfection unit, the count of viable (pathogenic or otherwise undesirable) micro-organisms is usually reduced. For removal of larger pests from the drain water withdrawn from the grow area usually a filter is provided upstream of the disinfection unit.

In case a pesticide is used in the grow area, the withdrawal water usually contains such pesticide. The use of UV-C in combination with hydrogen peroxide is advantageous for a degradation (oxidation) of one or more pesticides or other oxidisable chemical compounds.

The pH of the water being treated in the UV-C disinfection unit can also be of relevance for efficacy of the disinfecion or chemical reactions taking place in the disinfection unit can have an effect on pH. Thus in an embodiment a pH sensor is provided to measure the pH of water to be introduced into the decontamination unit (7) or a pH sensor is provided to measure the pH of decontaminated water that has left the decontamination unit. A acid/base dosage unit may also be provided in the water loop, e.g. configured to adjust the pH of withdrawal water before it is subjected to decontamination or thereafter.

The invention further relates to a process for producing a plant or a part thereof, e.g. flowers, vegetables or fruits, wherein plants are grown in a grow area (3) of a horticulture facility, preferably a horticulture facility according to the invention and wherein - whilst the plants are being grown - a withdrawal water stream (d, d1, d2, d3) is withdrawn from the grow area (3), a hydrogen peroxide solution (4, 5) is added to the water loop and the withdrawal water stream to which hydrogen peroxide has been applied or part thereof is recycled to the grow area, typically after having been combined with a supplemental feed water stream (a) and supplemented with nutrient (1) , wherein a hydrogen peroxide concentration is measured at a sampling point (2, 6, 8) downstream of where hydrogen peroxide has been added yet upstream of the growing plant, wherein the dosing rate at which hydrogen peroxide is added is determined making use of the measured hydrogen peroxide concentration. In particular a method according to the invention for cleaning/reducing deposit/avoiding deposit or a method for disinfecting and optionally for reducing pesticide content in the drain water withdrawn from the grow are is advantageously employed in a process according to the invention.

In a process or method according to the invention the hydrogen peroxide concentration of the nutrient liquid fed to the plants is generally kept below below 1.5 mmol/l, in particular below 0.75 mmol/l, preferably at 0.3 mmol/l or less, more preferably at 0.12 mmol/l or less.

### LEGEND TO THE FIGURES

1. Nutrient dosing unit
2. hydrogen peroxide measurement system
3. area for growing plants (typically comprising root environment, such as substrate, aqua culture or soil)
4. hydrogen peroxide dosage unit
5. hydrogen peroxide dosage unit
6. (sampling point of) hydrogen peroxide measurement system
7. UV-C disinfection unit
8. (sampling point of) hydrogen peroxide measurement system
9. (manual) valve, also for extra throttling
10. filter
11. (motor) valves
12. calibration 1
13. calibration 2
14. check valve
15. (manual) valve for bleeding
16. detector unit
17. sampling point
18. reservoir

a. feed water conduit (outside water loop)
b. feed water conduit (within water loop)
c. conduit connecting nutrient liquid outlet of nutrient dosing unit and water inlet of area for growing plants
d. (d1, d2, d3) withdrawal water conduit (a.k.a. drain water conduit)
e. recycle conduit
f. discharge water conduit
g. main line (such as conduit c, d, d1, d2 or d3)

## Claims

1. Horticulture facility, comprising a grow area (3) configured to grow plants, a water loop configured to recycle water withdrawn from an outlet of the grow area to an inlet of the grow area (3), the water loop comprising a feed water channel (b), which feed water channel (b) comprises a feed water outlet connected to a feed water inlet of a nutrient dosing unit (1) configured to dose nutrients to the feed water, thereby providing an aqueous nutrient liquid, a channel (c) configured to feed the aqueous nutrient liquid from the nutrient dosing unit (1) to growing plants in said area (3), a withdrawal water channel (d) having a withdrawal water inlet in fluid communication with a withdrawal water outlet from said grow area (3) and a recycle channel (e) configured to return water to said grow area (3), preferably via a recycle water channel outlet into the feed water conduit (b) upstream of the nutrient dosing unit (1) or directly into the nutrient dosing unit (1), wherein the facility comprises
a hydrogen peroxide dosing unit (4,5), configured to introduce a hydrogen peroxide solution into the water loop;
a hydrogen peroxide measurement system configured to determine a hydrogen peroxide concentration in the water loop, said hydrogen peroxide measurement system comprising a sampling unit having a sampling point (2,6,8) downstream of said hydrogen peroxide dosing unit (4,5), which hydrogen peroxide measurement system is configured to withdraw discrete liquid samples from liquid in the water loop at the sampling point configured to take samples from the water loop whilst a liquid flow through the water loop may continue and which hydrogen peroxide measurement system is configured to determine a hydrogen peroxide content of a liquid in said water loop; and wherein the horticulture facility comprises a controller unit configured to control the hydrogen peroxide content, in particular an automated controller unit adapted to receive hydrogen peroxide content related input data from the hydrogen peroxide measurement system and adapted to generate an output signal to the hydrogen peroxide dosing unit (4,5) to adjust the hydrogen peroxide dosing rate by the hydrogen peroxide dosing unit (4,5), dependent on said input.

2. Horticulture facility according to claim 1, wherein a hydrogen peroxide dosing unit (4) is configured to dose hydrogen peroxide into the channel (c) configured to feed the aqueous nutrient liquid, and wherein a sampling point of the hydrogen peroxide measurement system (2) is provided downstream of the nutrient dosing unit (1) yet upstream of the grow area (3), preferably at or near the outlet of the channel (c) for feeding the nutrient liquid

3. Horticulture facility according to claim 1 or 2, wherein a hydrogen peroxide dosing unit (4) is configured to dose hydrogen peroxide into the withdrawal water channel (d) and wherein a sampling point of the hydrogen peroxide measurement system (2) is provided downstream of the nutrient dosing unit (1), preferably at or near the outlet of the channel (c) for feeding the nutrient liquid.

4. Horticulture facility according to claim 1, 2 or 3, wherein the horticulture facility comprises a disinfection unit (7) configured to receive withdrawal water from the area (3) to a treatment with UV-C light, wherein a hydrogen peroxide dosing unit (5) is present upstream of the disinfection unit (7) and wherein downstream of the hydrogen peroxide dosing unit (5) one or more of said sampling points are provided.

5. Horticulture facility according to claim 4, wherein a sampling point (6) is provided downstream of the hydrogen peroxide dosing unit (5) and upstream of the withdrawal water inlet of the disinfection unit (in channel d2) or at the water inlet of the disinfection unit.

6. Horticulture facility according to claim 4 or 5, wherein a sampling point (8) is provided downstream of the hydrogen peroxide dosing unit (5) and at the outlet for the disinfected water of the disinfection unit (7) or downstream of the disinfection unit (7) yet upstream of a water discharge channel (f) (i.e. in conduit d3, upstream of the recycle conduit (e)).

7. Horticulture facility according to any of the preceding claims, wherein the hydrogen peroxide measurement system comprises a UV/VIS spectrophotometer or a fluorescence spectrometer.

8. Horticulture facility according to claim 7, wherein the detector unit comprises a sample test area, the test area comprising a colorimetric reagent system, preferably a dry-reagent test strip, for (direct) detection of the presence of hydrogen peroxide in the sample, the colorimetric reagent system comprising a chromogen responsive to hydrogen peroxide and a catalyst having peroxidase activity, preferably a catalyst having peroxidase activity at a pH in the range of about 4.0 to about 6.5.

9. Horticulture facility, according to any of the preceding claims, wherein the hydrogen peroxide measurement system comprises a sampling unit configured to contact samples at or taken from the sampling point to sample test areas, wherein the hydrogen peroxide measurement system comprises a fluid-tightly sealed housing, wherein is comprised a spindle for accommodating a support having sample test areas; an actuator for rotating said spindle; an aperture in the fluid-tightly sealed housing for contact of at least one of said test areas with the samples; an optical detector unit, in particular a UV/VIS spectrophotometer or a fluorescence spectrometer, configured to measure an optical property of at least one of said test areas after during passing said aperture; and a detection data transmitter, configured to transmit detection data to the controller unit.

10. Horticulture facility according to any of the preceding claims, wherein the grow area (3) is indoors, preferably in a greenhouse.

11. Method for cleaning at least a part of a water loop, reducing deposition in at least part of a water loop or avoiding deposition in at least part of a water loop, of a horticulture facility, preferably a horticulture facility according to any of the preceding claims, the facility comprising a grow area (3) wherein plants are being grown, wherein
water comprising nutrients (an aqueous nutrient liquid) is fed to the plants in the grow area (3) and withdrawal water is withdrawn from the grow area, hydrogen peroxide solution (4) is added to the water comprising nutrients or the withdrawal water and the resultant water comprising nutrients respectively the resultant withdrawal water comprising hydrogen peroxide is flown through the water loop or a part thereof to be cleaned, to be subjected to deposition reduction or to be subjected to deposition avoidance, thereby cleaning, reducing deposition or avoiding deposition in at least part of the water loop downstream of the introduction of the hydrogen peroxide; wherein
a hydrogen peroxide concentration (2) in the water loop is determined downstream of the addition of the hydrogen peroxide yet upstream of the plants in the grow area (3) and wherein the dosing rate at which the hydrogen peroxide is added (4) to the withdrawn water is regulated on the basis of said determined hydrogen peroxide concentration.

12. Method according to claim 11, wherein said determined hydrogen peroxide concentration is compared with an upper threshold value, a lower threshold value or both and the hydrogen peroxide dosage rate is increased if the determined concentration is at or below the lower threshold value, respectively decreased if the determined concentration is at or above the upper lower threshold value.

13. Method according to claim 11 or 12, wherein said determined hydrogen peroxide concentration is kept below 1.5 mmol/l, below 0.75 mmol/l, below 0.3 mmol/l or below 0.12 mmol/l

14. Method for disinfecting withdrawal water withdrawn from a grow area (3) comprising plants of a horticulture facility according to any of the claims 1-10, wherein
a hydrogen peroxide solution (5) is added to the withdrawal water;
the withdrawal water, comprising hydrogen peroxide is subjected to a disinfection treatment (7) by irradiation with UV-light, in particular UV-C light;
at least a part of the disinfected withdrawal water is returned to the grow area (3), wherein
a hydrogen peroxide concentration in the withdrawal water comprising hydrogen peroxide is determined, before and/or after the disinfection treatment (7) and wherein the dosing rate at which the hydrogen peroxide is added to the withdrawal water is determined on the basis of said determined hydrogen peroxide concentration or hydrogen peroxide concentrations.

15. Method according to claim 14, wherein during the disinfection treatment one or more pesticides present in the withdrawal water that is being treated with UV-light are degraded, in particular oxidized in the presence of the hydrogen peroxide.

16. Method according to claim 14 or 15,, wherein said determined hydrogen peroxide concentration **before** the disinfection unit is kept in the range of 0.1-2.0 mmol/l, preferably in the range of 0.5-1.25 mmol/l.

17. Method according to claim 14, 15, or 16, wherein said determined hydrogen peroxide concentration **after** the disinfection unit is kept below 1.5 mmol/l, below 0.75 mmol/l, below 0.3 mmol/l or below 0.12 mmol/l (with the proviso that it is not exceeding the hydrogen peroxide concentration in the water entering the disinfection unit).

18. Process for producing a plant or a part thereof, e.g. flowers, vegetables or fruits, wherein plants are being grown in a grow area (3) of a horticulture facility, preferably a horticulture facility according to any of the claims 1-10 and wherein - whilst the plants are being grown - a withdrawal water stream (d, d1, d2, d3) is withdrawn from the grow area (3), a hydrogen peroxide solution (4, 5) is added to the withdrawal water stream and the withdrawal water stream to which hydrogen peroxide has been applied or part thereof is recycled to the grow area (3), typically after having been combined with a supplemental feed water stream (a) and after having been supplemented with nutrient (1), wherein a hydrogen peroxide concentration is measured at a sampling point (2, 6, 8) downstream of where hydrogen peroxide has been added yet upstream of the growing plants, wherein the dosing rate at which hydrogen peroxide is added is determined making use of the measured hydrogen peroxide concentration.

19. Process according to claim 18, wherein said determined hydrogen peroxide concentration of the aqueous liquid comprising nutrients is kept below 1.5 mmol/l, below 0.75 mmol/l below 0.3 mmol/l or below 0.12 mmol/l.
